## Europäisches Patentamt

(19) **European Patent Office**

**Office européen des brevets**

(11) Veröffentlichungsnummer: **0 054 717**
**B1**

(12) **EUROPÄISCHE PATENTSCHRIFT**

(45) Veröffentlichungstag der Patentschrift:
22.04.87

(21) Anmeldenummer: **81109234.5**

(22) Anmeldetag: **29.10.81**

(51) Int. Cl.⁴: **G 05 D 16/06**

(54) **Vorrichtung zur Entnahme von Gas.**

(30) Priorität: **23.12.80 DE 3048732**

(43) Veröffentlichungstag der Anmeldung:
**30.06.82 Patentblatt 82/26**

(45) Bekanntmachung des Hinweises auf die Patenterteilung:
**22.04.87 Patentblatt 87/17**

(84) Benannte Vertragsstaaten:
**AT BE CH DE FR IT LI LU NL SE**

(56) Entgegenhaltungen:
**DE - C - 763 658**
**FR - A - 1 187 594**
**FR - A - 1 313 173**
**FR - A - 1 390 963**
**US - A - 3 547 143**

(73) Patentinhaber: **Carl Esser Druckgasarmaturen,
Zeiss-Strasse, D-5000 Köln 40 (DE)**

(72) Erfinder: **Wichterich, Hans, Kölnstrasse 34,
D-5000 Köln 50 (DE)**
Erfinder: **Olma, Ernst, Weiler Strasse 10, D-5040 Brühl
(DE)**

(74) Vertreter: **Buschhoff, Josef, Dipl.-Ing. et al,
Kaiser-Wilhelm-Ring 24 Postfach 190 408,
D-5000 Köln 1 (DE)**

### Beschreibung

Die Erfindung betrifft eine Vorrichtung zur Entnahme von Gas mit einem auf ein Verbrauchsgerät abgestimmten niederen Druck aus einem Hochdruckbehälter, dessen Hauptventil von der unter Federdruck stehenden Membran einer Reduzierventil-Einheit geöffnet wird, wenn es mit dieser verbunden wird.

Es ist eine Vorrichtung dieser Art bekannt (FR-PS 1 390 963), bei der der Hochdruckbehälter, der eine Gaspatrone oder eine Gasflasche sein kann, in das Reduzierventil eingeschraubt werden muss, was umständlich ist und eines gewissen Zeitaufwandes bedarf. Werden Gasflaschen verwendet, muss auf diese vorher noch ein Adapter angeschraubt werden, mit dem das Hauptventil durch eine Überwurfmutter verbunden werden muss. Diese Vorbereitungen sind umständlich und lassen die bekannte Vorrichtung für den Einsatz im Haushalt wenig geeignet erscheinen, wo sich auch Frauen und Kinder mit dem Auswechseln der Hochdruckbehälter befassen und wo es wesentlich ist, auf einfachste Handhabung und absolute Sicherheit Bedacht zu nehmen.

Aufgabe der Erfindung ist es, eine Gasentnahmevorrichtung der eingangs näher erläuterten Art so auszubilden, dass der leere Hochdruckbehälter sehr leicht und rasch gegen einen vollen Behälter ausgewechselt werden kann und wobei sich das Hauptventil beim Einsetzen und Herausnehmen des Hochdruckbehälters selbsttätig öffnet und schliesst und die Gefahr von Unfällen sicher vermieden wird.

Diese Aufgabe wird mit der Erfindung dadurch gelöst, dass die Reduzierventileinheit am unteren Ende einer schachtartigen Aufnahmevorrichtung ortsfest angeordnet ist, in welcher der Hochdruckbehälter kopfüber angeordnet und mit seinem nach unten weisenden Hauptventil in das Reduzierventil der Reduzierventileinheit eingesteckt ist.

Eine derartige Vorrichtung eignet sich besonders für die Gasversorgung im Haushalt, da hierbei das Auswechseln eines leeren Hochdruckbehälters gegen einen vollen besonders einfach ist. Beispielsweise für die Kohlensäureversorgung von Geräten, die kohlensäurehaltige Getränke ausgeben, ist die erfindungsgemässe Vorrichtung mit Vorteil anwendbar, da es lediglich erforderlich ist, die mit Kohlensäure unter Hochdruck gefüllte Gasflasche mit dem als Füll- und Absperrventil dienenden Hauptventil voran in die Aufnahmevorrichtung gleiten zu lassen, wobei sich das Hauptventil unter dem Gewicht der Flasche von selbst in die hierfür vorgesehenen Aufnahmeöffnungen des Reduzierventils einsteckt. Ein an der Membran des Reduzierventiles befestigter Stössel, der nach oben weist, drückt von unten her gegen das Verschlussstück bzw. gegen die Ventilspindel des Hauptventiles des Hochdruckbehälters, so dass das Hauptventil geöffnet wird, wenn Hauptventil und Reduzierventileinheit eine Steckverbindung eingehen.

Mit einer Stütze, die beispielsweise eine die Aufnahmevorrichtung verschliessende Klappe oder eine diese oberseitig begrenzende Schrägfläche sein kann, kann dann auf die nach oben weisende Unterseite der Flasche ein genügend hoher Druck ausgeübt werden, der zum Öffnen des Ventiles ausreicht, wenn der Stössel des Reduzierventiles auf das Verschlussstück drückt und das Hauptventil vollständig in die hierfür vorgesehene Aufnahme des Reduzierventiles hineingleitet.

Wenn der Hochdruckbehälter aus der schachtartigen Aufnahmevorrichtung herausgenommen wird, schliesst sich das Hauptventil des Hochdruckbehälters von selbst, sobald die Steckverbindung mit dem Reduzierventil gelöst wird.

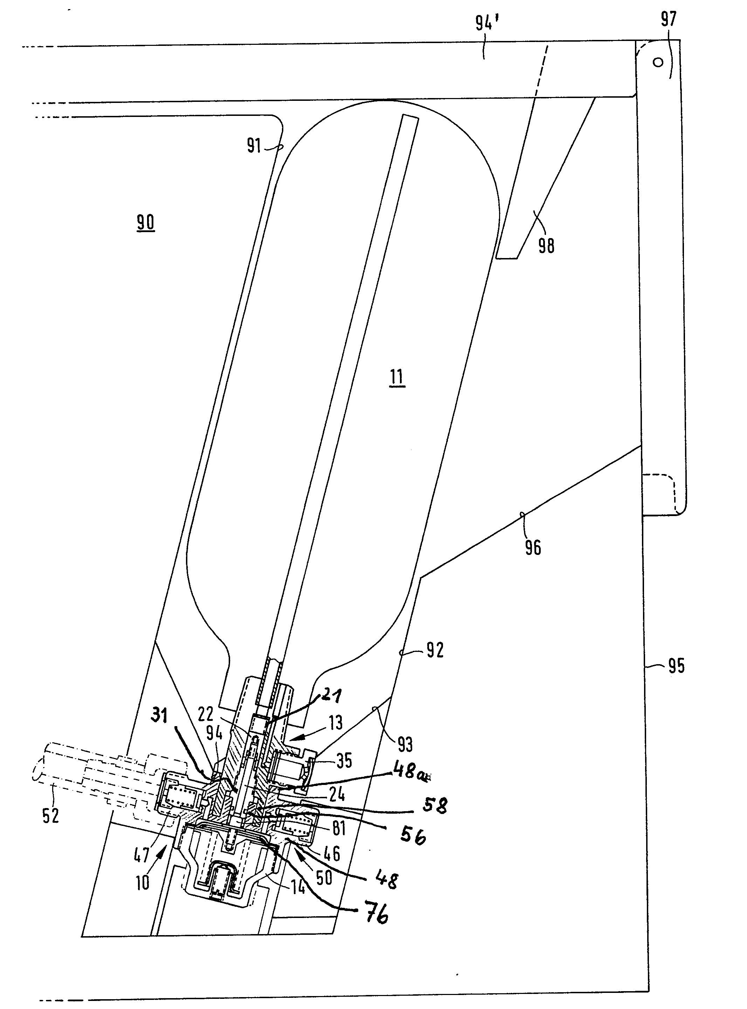

Weitere Merkmale und Vorteile der Erfindung ergeben sich aus der nachfolgenden Beschreibung und der Zeichnung, in der eine bevorzugte Ausführungsform der Erfindung näher erläutert ist, die eine Teilansicht eines Küchen- oder Barschrankes mit einer Aufnahmevorrichtung für eine Hochdruckgasflasche zeigt, in der die Reduzierventileinheit ortsfest eingebaut ist und wobei die Reduzierventileinheit und das Hauptventil des Hochdruckbehälters im Schnitt dargestellt sind.

In der Zeichnung ist mit 10 eine Ventilanordnung für einen Hochdruckbehälter 11 bezeichnet, der als Gasflasche ausgebildet ist und ein unter Hochdruck stehendes $CO_2$-Gas enthält.

Die Ventilanordnung 10 besteht aus einem in den Flaschenhals 12 des Hochdruckbehälters 11 eingeschraubten Hauptventil 13 und aus einer Reduzierventileinheit 50, die am unteren Ende einer Aufnahmevorrichtung 91 ortsfest eingebaut ist, die sich in einem Tisch oder Schrank 90 befindet.

Die in der Zeichnung dargestellte Vorrichtung ist beispielsweise für den Betrieb einer Bar oder für den Haushalt vorgesehen, wo einer Abfülleinrichtung für Getränke Kohlensäuregas zugeführt werden soll, das in kleinen Gasflaschen angeliefert wird.

Für die Aufnahme des Hochdruckbehälters 11, nämlich der mit $CO_2$ gefüllten Gasflasche, ist im Tisch oder Schrank 90 als Aufnahmevorrichtung 91 ein geringfügig gegen die Vertikale geneigter Schacht vorgesehen, dessen unteres Ende 92 sich mit schrägen Wänden 93 trichterförmig verjüngt. Unter der engeren Trichteröffnung 94 ist die Reduzierventileinheit 50 zusammen mit der zum Gerät führenden Entnahmeleitung 52 ortsfest derart angeordnet, dass ein an der Membrane 76 des Reduzierventiles 14 befestigter Stössel 81 nach oben weist.

An der Oberseite wird der Schacht 91 durch eine Tischplatte 94' verschlossen, an der sich der Hochdruckbehälter 11 abstützen kann, wenn dieser mit seinem Hauptventil 13 in die ortsfest montierte Reduzierventileinheit 50 eingeschoben ist. An der Vorderseite 95 des Tisches befindet sich eine Einwurföffnung 96 für den Hochdruckbehälter 11, die mit einer Klappe 97 verschlossen werden kann, an der ein mit dieser zusammen schwenkender Hebel 98 angeordnet ist, der sich beim Schliessen der Klappe 97 seitlich an den Hochdruckbehälter 11 anlegt und diesen im Schacht 91 in die in der Zeichnung dargestellte Lage drückt.

Zu der Reduzierventileinheit 50 gehören das Reduzierventil 14, ein Niederdruck-Sicherheitsventil 46 und ein Rückstromsicherungsventil 47, die in einem gemeinsamen Ventilgehäuse 48 untergebracht sind.

Das Hauptventil 13 des Hochdruckbehälters 11 dient als Füll- und Absperrventil und wirkt mit dem Reduzierventil 14 zusammen als Entnahmeventil, mit dem aus dem Hochdruckbehälter 11 $CO_2$-Gas mit einem auf ein nicht näher dargestelltes Verbrauchsgerät abgestimmten niederen Druck entnommen werden kann. Das Hauptventil 13 hat eine Ventilspindel 24, die mit dem Stössel 81 des Reduzierventiles 14 zusammenwirkt und das Ventilverschlussstück 22 des Hauptventils von seinem Sitz abhebt, wenn es von dem Stössel 81 des Reduzierventiles 14 entgegen der Wirkung einer Feder nach innen gedrückt wird.

Wenn man einen gefüllten Hochdruckbehälter 11, beispielsweise eine gefüllte Gasflasche, durch die Einfüllöffnung 96 in die Aufnahmevorrichtung 91 schiebt, gleitet das Hauptventil 13 an den Schrägflächen 93 des im unteren Teil trichterförmigen Schachtes 91 entlang und wird selbsttätig in das Reduzierventil 14 der Reduzierventileinheit 50 eingeführt. Der anfänglich hohe Widerstand beim Öffnen des Hauptventiles 13 wird beim Schliessen der Klappe 97 leicht dadurch überwunden, dass der mit der Klappe 97 verbundene Hebel 98 das hintere Ende der Gasflasche an der von der Tischplatte 94 gebildeten Schrägfläche entlang vollends in die Aufnahmevorrichtung 91 schiebt. Der Hochdruckbehälter 11 wird hierbei so weit in Axialrichtung verschoben, dass die Teile 31 und 58 des Hauptventiles einerseits und die Teile 48b und 56 der Reduzierventileinheit 50 andererseits vollständig ineinandergreifen. Hierbei drückt der Stössel 81 des Reduzierventiles gegen die Ventilspindel 24 und öffnet das Hauptventil.

Wenn der Hochdruckbehälter 11 leer ist, ist es lediglich erforderlich, die Klappe 97 zu öffnen und die Gasflasche 11 aus dem Schacht 91 herauszunehmen. Hierbei schliesst sich das Hauptventil 13 von selbst, da die Ventilfeder 21 des Hauptventiles das Ventilverschlussstück 22 sofort auf seinen Sitz drückt, wenn die Ventilspindel 24 des Hauptventiles nicht mehr vom Stössel 81 des Reduzierventiles 14 belastet wird.

Bei der beschriebenen Anordnung besteht ein besonderer Vorteil darin, dass im Betrieb, d.h. nachdem das Hauptventil erst einmal geöffnet wurde und der in der Ventilanordnung eingestellte Niederdruck erreicht ist, der auch bei Gasentnahme nie wesentlich überschritten wird, der von einer gewöhnlichen Gasflasche ausgeübte Druck grösser ist als der Niederdruck. Aus diesem Grunde reicht eine einfache Steckverbindung zwischen Hauptventil und Reduzierventil-Einheit aus und es ist möglich, die Hochdruckbehälter jederzeit gefahrlos aus dem Schacht zu entnehmen und wieder einzusetzen. Eine Unfallgefahr besteht auch dann nicht, wenn sich die Tischplatte 94 im Betrieb löst oder vom Tisch 90 abgenommen wird.

Wie bereits angedeutet, kann zwischen Hauptventil und Reduzierventil-Einheit auch eine Schraubverbindung, ein Bajonettverschluss oder der übliche Kugel-Sicherungsring vorgesehen werden. Es ist auch möglich, die Ventilanordnung ohne die Sicherheitsventile herzustellen, wenn solche Einrichtungen anderweitig vorhanden sind. Auch die Überkopfanordnung von Hochdruckbehälter und Reduzierventil kann etwas anders ausgebildet werden, ohne den Erfindungsgedanken zu verlassen.

**Patentansprüche**

1. Vorrichtung zur Entnahme von Gas mit einem auf ein Verbrauchsgerät abgestimmten niederen Druck aus einem Hochdruckbehälter, dessen Hauptventil von der unter Federdruck stehenden Membran einer Reduzierventileinheit geöffnet wird, wenn es mit dieser verbunden wird, dadurch gekennzeichnet, dass die Reduzierventileinheit (50) am unteren Ende (92) einer schachtartigen Aufnahmevorrichtung (91) ortsfest angeordnet ist, in welcher der Hochdruckbehälter (11) kopfüber angeordnet und mit seinem nach unten weisenden Hauptventil (13) in das Reduzierventil (14) der Reduzierventileinheit (50) eingesteckt ist.

2. Vorrichtung nach Anspruch 1, dadurch gekennzeichnet, dass an der Membran (76) des Reduzierventiles (14) ein Stössel (81) befestigt ist, der nach oben weist und von unten her gegen das Verschlussstück (22) bzw. gegen die Ventilspindel (24) des Hauptventiles (13) des Hochdruckbehälters (11) drückt.

3. Vorrichtung nach Anspruch 1 oder 2, dadurch gekennzeichnet, dass zwischen Hauptventil (13) und Reduzierventileinheit (50) ein Kugel-Sicherungsring vorgesehen ist.

4. Vorrichtung nach Anspruch 1 oder 2, dadurch gekennzeichnet, dass zwischen Hauptventil (13) und Reduzierventileinheit (50) ein Bajonettverschluss vorgesehen ist.

5. Vorrichtung nach Anspruch 1 oder 2, dadurch gekennzeichnet, dass am oberen Ende der Aufnahmevorrichtung (91) eine Stütze (94') angeordnet ist, an der der mit seinem Hauptventil (13) in das Reduzierventil (50) eingeschobene Hochdruckbehälter (11) abstützbar ist.

**Claims**

1. Device for dispensing gas at a low pressure, adapted to a consumer article or appliance, from a high-pressure container whose main valve is opened by the diaphragm of a pressure-reducing valve unit when the said main valve is connected to the latter, the diaphragm being under spring pressure, characterised in that the reducing valve unit (50) is arranged in stationary manner at the lower end (92) of a housing device (91) which is in the manner of a well or shaft and in which the high-pressure container (11) is arranged head downwards and is inserted with its downwardly directed main valve (13) into the reducing valve (14) of the reducing valve unit (50).

2. Device according to claim 1, characterised in that there is secured to the diaphragm (76) of the reducing valve (14) a plunger (81) which is directed upwards and presses from below against the closure member (22) or against the valve spindle (24) of the main valve (13) of the high-pressure container (11).

3. Device according to claim 1 or 2, characterised in that a ball securing ring is provided between main valve (13) and reducing valve unit (50).

4. Device according to claim 1 or 2, characterised in that a bayonet fastening is provided between main valve (13) and reducing valve unit (50).

5. Device according to claim 1 or 2, characterised in that at the upper end of the housing device (91) there is arranged a support (94') on which there can bear the high-pressure container (11) which is inserted with its main valve (13) into the reducing valve (50).

**Revendications**

1. Dispositif pour le soutirage de gaz à basse pression accordée à un appareil d'utilisation du gaz à partir d'un réservoir haute pression dont la soupape principale est amenée à l'état ouvert par la membrane sous pression de ressort d'un détendeur lorsqu'il est raccordé à ce dernier, caractérisé en ce que le détendeur (50) est fixé solidement à l'extrémité inférieure (92) d'un dispositif de réception (91) en forme de puits dans lequel le réservoir haute pression (11) est placé la tête en avant avec sa soupape principale (13) pointée vers le bas et fichées dans le détendeur (14) du détendeur (50).

2. Dispositif selon la revendication 1, caractérisé en ce qu'un poussoir (81) fixé sur la membrane (76) du détendeur (14) pointe vers le haut et exerce une pression de bas en haut sur l'obturateur (22) et sur la tige (24) de la soupape principale (13) de réservoir ou récipient haute pression.

3. Dispositif selon la revendication 1 ou 2, caractérisé en ce qu'on prévoit un collier de sûreté à bille entre la soupape principale (13) et le détendeur (50).

4. Dispositif selon la revendication 1 ou 2, caractérisé en ce qu'on prévoit un joint à baïonnette entre la soupape principale (13) et le détendeur (50).

5. Dispositif selon la revendication 1 ou 2, caractérisé en ce qu'un support (94') est fixé à l'extrémité supérieure du dispositif de réception (91) sur lequel peut s'appuyer le réservoir haute pression (11) avec sa soupape principale (13) fichée dans le détendeur (50).